# EUROPEAN PATENT APPLICATION

(11) **EP 1 895 482 A1**
(43) Date of publication of application: **05.03.2008**
(21) Application number: 05767163.8
(22) Date of filing: 23.06.2005
(51) Int. Cl.: G07F 17/32

(54) **BET VALIDATION AND COLLECTION MACHINE**

(71) Applicant: Euskal Kirol Apostuak, S.A., 48009 Bilbao (ES)
(72) Inventor: SESMA ARICETA, Alejandro, 48009 Bilbao (ES)
(74) Representative: Esteban Perez-Serrano, Maria Isabel
(86) International application number: PCT/ES2005/070098
(87) International publication number: WO 2006/136623

(57) **Abstract**

The object of the present invention is a bet validation and collection machine that pays the prize of the bets in cash or credits it to a magnetic strip card by the presence of an dispensing device of said magnetic strip cards in which the prize money of winning bets is paid, also allowing to recharge the magnetic strip cad by inserting the money in the machine, being further provided with a reader for the magnetic strip cards dispensed by the machine where it is verified that the prize has been charged in the magnetic strip card, as well as allowing to place new bets with said card.

## Description

### OBJECT OF THE INVENTION

The object of the present invention is a bet validation and collection machine that pays the bet prizes in cash or credits it to a magnetic strip card.

The invention is characterised by the presence of a dispensing device of said magnetic strip cards in which the bet prizes are credited, and by allowing to recharge the magnetic strip by introducing the money in the machine.

It also includes a reader of the cards dispensed by the machine where it is verified that the prize has been deposited in the magnetic strip card, as well as allowing to perform additional bets.

### BACKGROUND OF THE INVENTION

Betting machines are well known in the state of the art that are connected to a central unit which in turn is connected with the corresponding betting organisation that only issue a ticket as a receipt of payment of the bet made by the better.

Among prior systems is Spanish Patent with publication number ES0483014, which is applicable to a national lottery game.

There are also systems based on local betting networks, such as Spanish Patent with publication number ES2025020, which comprises a central control computer interconnected to various player terminals configured as machines for dispensing printed information in the form of tickets that indicate the combination bet by the player.

The drawback of the aforementioned systems is that it is not possible to issue a magnetic strip card in which the prize is credited when the prize amount is high, allowing to cash the money later in ATM's or to continue betting on the same machine by using said cards in the machine itself.

All of these drawbacks are solved by the invention described hereunder.

### DESCRIPTION OF THE INVENTION

The present invention relates to a machine for validation and collection of bets that forms part of a network of machines controlled by a Central Processing Unit (CPU) which is in turn connected with the corresponding public administration agency.

The machine allows making several bets that can be selected on a touch screen provided with a virtual keyboard.

It also displays a promotional screen providing, for example, general information, publicity, information on athletic or social events, or virtual sporting events.

It is also provided a coin insertion slot and a note and ticket reader for paying the bet, subsequently issuing a ticket voucher by a ticket dispenser.

After the event on which the bet was placed has ended, the note and ticket reader allows to check whether a prize corresponds to the ticket.

Payment of cash prizes, as well as returning change in coins when a non-exact payment is made is performed at a return tray.

If the prize amount is less than a specific amount the machine gives the option of choosing between payment in cash at the return tray or crediting the prize in a magnetic strip card that the machine issues by a magnetic card strip dispenser.

If the prize amount is more than said specific amount, the payment is made by the magnetic strip card.

Said magnetic strip cards have an associated personal identification number (PIN) to prevent an unauthorised use of the magnetic strip card if the card should fall in the hands of another person.

The magnetic strip card can also be used in bank ATM networks where, by a connection established between the server of said networks and the central unit of the betting system allows operations such as cashing the card balance, transferring it to a user's account and recharging the balance of a magnetic card from a user's bank account.

In addition, the magnetic strip card can be reused in the bet validation and collection machine by inserting it in a magnetic strip card reader to make a new bet with the available balance of the previous prize or to collect the prize in a betting office.

### DESCRIPTION OF THE DRAWINGS

The present descriptive memory is completed with a set of drawings that illustrate the preferred and non-limiting example of the invention.

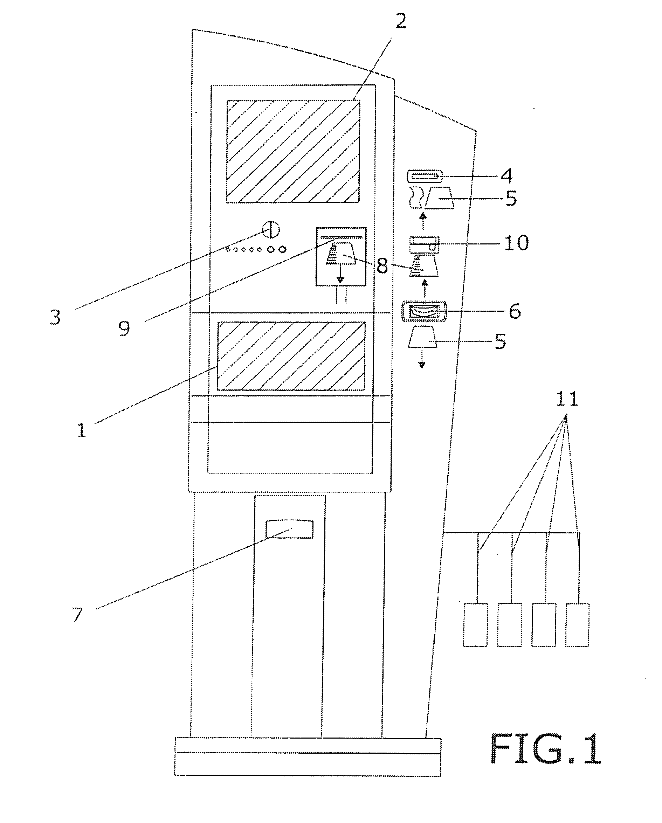

Figure 1 shows a perspective view of the bet validation and collection machine of the invention.

### PREFERRED EMBODIMENT OF THE INVENTION

In view of the above, the present invention relates to a machine for bet validation and collection controlled from a central unit that is also connected to the corresponding public administration agency.

The bet validation and collection machine has a touch screen (1) from which bets are selected using a virtual keyboard (1.1).

It is also provided with a promotional screen (2) for emitting, among others, general information, publicity, race clips and virtual races.

The user pays the bet using a coin insertion slot (3) and a reader (4) for notes and tickets, a ticket (5) being issued by a ticket dispenser (6).as a receipt of the bet.

After the event on which the bet was placed has ended, the note and ticket reader (4) allows to check whether a prize corresponds to the bet ticket (5).

The machine is provided on its bottom part with a return tray (7) for paying prizes and coin returns.

If the prize amount is less than a specific amount the machine gives the option of choosing between payment in cash at the return tray (7) or crediting the prize in a magnetic strip card (8) with an associated PIN, preferably a four-digit number, that the machine issues by a magnetic card strip dispenser (9), while if the prize amount is more than said specific amount, the payment is made by the magnetic strip card (8).

The magnetic strip card (8) can also be used in bank ATM networks (11) where,' by a connection established between the server of said networks (11) and the central unit of the betting system allows operations such as cashing the balance of the card (8), transferring it to a user's account and recharging the balance of a magnetic card (8) from a user's bank account.

In addition, the machine is provided with a reader (10) of magnetic strip cards for placing a new bet with the balance available in the magnetic strip card (8) corresponding to the previous prize.

The essence of this invention is not affected by variations of the materials, shape, size and arrangement of its component elements, described in a non-limiting manner that should allow its reproduction by an expert.

## Claims

1. Bet validation and collection machine provided with a touch screen (1) with which the bets are placed, selected by a virtual keyboard (1.1), and with a promotional screen (2), a coin insertion slot (3) and a ticket and note reader (4) for paying the bet with the corresponding issue of a bet ticket (5) by a ticket dispenser (6) and a coin return tray (7), and where after the event on which the bet is placed has finished the ticket and note reader (4) allows to verify whether the bet ticket (5) has a prize, **characterised in that** said prize is collected in the coin return tray (7) or it is credited in a magnetic strip card (8) issued by a magnetic strip card dispenser (9) that can be used in ATM's of bank networks (11), which by a connection between the server of said networks (11) and the central unit of the betting system allows such operations as cashing the balance of the magnetic strip card (8) both in cash or by transferring it to the user's bank account, recharging the balance of the magnetic strip card (8) by debiting the user's bank account or collecting the prize in a betting office.

2. Bet validation and collection machine according to claim 1 **characterised in that** it has a magnetic strip card reader (10) that allows to place a new bet with the balance of the magnetic strip card (8) corresponding to the previous prize.

3. Bet validation and collection machine according to claim 1 **characterised in that** the magnetic strip card (8) has an associated PIN.

4. Bet validation and collection machine according to claim 1 **characterised in that** when the prize is greater than a certain amount the collection is performed by the magnetic strip card (8).

5. Bet validation and collection machine according to claim 3 **characterised in that** the associated PIN has four digits.
